# FASCICULE DE BREVET EUROPEEN

(11) **EP 2 205 507 B1**
(45) Date de publication et mention de la délivrance du brevet: **20.04.2011**
(21) Numéro de dépôt: 08839842.5
(22) Date de dépôt: 17.10.2008
(51) Int. Cl.: B65G 17/10, D01B 1/36

(54) **MAILLON DE CHAINE ET CHAINE TRANSPORTEUSE EQUIPEE D'UN TEL MAILLON ET ENSEMBLE DE BLOCAGE CONSTITUE D'UNE TELLE CHAINE**
KETTENGLIED UND FÖRDERKETTE MIT DERARTIGEM GLIED SOWIE BLOCKIERANORDNUNG MIT DERARTIGER KETTE
CHAIN LINK AND CONVEYING CHAIN INCLUDING SUCH LINK, AND BLOCKING ASSEMBLY COMPRISING SUCH CHAIN

(30) Priorité: 17.10.2007 FR 0758385
(43) Date de publication de la demande: 14.07.2010
(73) Titulaire: N.V. Depoortere, 8791 Beveren-Leie (BE)
(72) Inventeur: CLAERBOUT, Valentin, 8500 Kortrijk (BE)
(74) Mandataire: Cochonneau, Olivier
(86) Numéro de dépôt international: PCT/EP2008/064059
(87) Numéro de publication internationale: WO 2009/050278

(56) Documents cités:
- BE-A- 466 110
- BE-A- 557 619
- GB-A- 245 511
- GB-A- 590 062
- US-A- 878 650
- US-A- 2 428 507
- US-A- 3 374 880

## Description

La présente invention est relative à un maillon de chaîne, et une chaîne transporteuse équipée d'un tel maillon, ainsi qu'à un ensemble de blocage constitué d'une telle chaîne, ledit ensemble étant agencé sur une machine industrielle pour la tenue et le transport de tiges végétales, notamment pour les plantes à fibres telles que lin ou le chanvre. L'invention sera mise en oeuvre par les fabricants de machines industrielles et/ou dans les métallurgies, et trouvera son application dans le domaine industriel.

Parmi les diverses machines industrielles existant sur le marché, certaines d'entre-elles nécessitent de transporter et de maintenir bloquées les tiges végétales en vue de leur traitement, comme par exemple les égreneuses pour l'extraction des capsules et des porte graines qui se trouvent sur les tiges de lin, ou encore, les turbines de teillage pour l'extraction de la partie fibreuse ou filasse et l'élimination de la partie boiseuse ou anas sur les tiges de lin ou de chanvre. Ces opérations de maintien et de transport sont assurées par un ensemble formé d'une chaîne transporteuse et d'une courroie de blocage. La chaîne transporteuse, dont la section forme un « U », coopère avec la courroie de blocage, dont la section forme un rectangle ou un « T », ladite forme rectangulaire ou en « T » venant se loger dans la forme en « U ». Les tiges végétales, positionnées entre la chaîne et la courroie, peuvent alors être transportées tout en étant maintenues bloquées, en vue d'effectuer notamment les opérations d'égrenage ou de teillage.

La chaîne transporteuse est constituée d'une courroie sans fin, notamment en caoutchouc, sur laquelle sont fixés des maillons disposés en boucle autour de la courroie. Les maillons présentent une forme en « U », telle que définie ci-dessus, apte à recevoir la courroie de blocage, de forme rectangulaire ou en « T ». En outre, ces maillons s'emboîtent successivement les uns après les autres pour former une chaîne continue présentant une rigidité. Ils présentent, par ailleurs, de faibles dimensions pour limiter l'encombrement sur la machine, et ont notamment une largeur de l'ordre de 30 mm à 40 mm, voire plus.

Selon un premier mode de réalisation connu, le maillon se compose d'une pièce réalisée en tôle comprenant plusieurs plis sur ses bords latéraux, afin de pouvoir réaliser l'emboîtement entre les maillons formant la chaîne. Une telle conception par pliage ou estampage de la matière présente pour inconvénient majeur de concevoir des maillons fragiles, du fait de leur faible dimensionnement. Par ailleurs, il est difficile de réaliser un ajustement convenable entre les maillons, du fait des rayons de courbures existant sur lesdits maillons lors du pliage ou de l'estampage de la pièce.

Selon un second mode de réalisation, ayant notamment pour but de supprimer le pliage de la matière, le maillon est directement réalisé en moulage, notamment dans de la fonte. Les maillons réalisés en pièce de fonderie ont pour inconvénient de présenter une épaisseur importante. En outre, le moule utilisé pour la fabrication du maillon présente nécessairement un angle de dépouille afin de permettre le démoulage dudit maillon. Les maillons présentent, par conséquent, une conicité sur leurs bords latéraux, de l'ordre de 5 %. Il en résulte que l'emboîtement entre les maillons formant la chaîne n'est pas rigoureux ; les tiges de plante, bloquées entre les maillons de la chaîne transporteuse et la chaîne de blocage, sont alors susceptibles de rester coincées entre les maillons.

On connaît les documents GB.590.062, GB.245.511 et BE.466.110 qui divulguent chacun un ensemble pour le transport de tiges végétales. Concernant le document BE.466.110, celui-ci divulgue un ensemble constitué de deux courroies souples, l'une présentant une échancrure en forme de queue d'aronde dans laquelle se loge la seconde courroie en forme de queue d'aronde, la souplesse de la première courroie, en coopération avec des poulies de forme bombée, permettant l'écartement de l'échancrure en queue d'aronde pour faciliter l'introduction ou le retrait des tiges végétales.

Selon les documents GB.590.062 et GB.245.511, l'ensemble comprend une chaîne à maillons dans laquelle se loge une courroie pour le transport des tiges, lesquelles sont bloquées entre les maillons et la courroie durant leur transport. De tels maillons présentent les inconvénients précités.

On connaît également les documents BE.557.619, US.2.428.507 et US.3.374.880. Ces documents divulguent des chaînes à maillons pour le transport de marchandises, notamment des produits granulaires. Selon ces documents, la chaîne comprend deux types de maillons à savoir des maillons internes et des maillons externes, lesquels sont disposés en alternance les uns après les autres. En outre, les extrémités avant et arrière des maillons externes chevauchent les extrémités avant et arrière des maillons internes adjacents, ce qui garantit une continuité, c'est-à-dire une fermeture complète sur les côtés latéraux de la chaîne, afin d'éviter la chute de marchandises sur lesdits côtés latéraux de la chaîne. De telles chaînes ne sont toutefois pas ou sont mal adaptées pour la tenue et le transport de tiges végétales, celles-ci devant à la fois être robustes et assurer un maintien convenable des tiges végétales, en coopération avec une courroie de blocage, pour assurer le transport des tiges végétales sans risque de chute, notamment lorsque ces tiges sont soumises à des opérations de brossage ou autres.

La présente invention a pour but de pallier les inconvénients définis ci-dessus. A cet effet, l'invention concerne un maillon de chaîne pour la tenue et le transport de tiges végétales sur les machines industrielles, notamment pour les tiges de lin, le chanvre ou toutes autres plantes à fibres, ledit maillon étant apte à être fixé sur une courroie et à coopérer avec des maillons adjacents pour former une chaîne continue. Le maillon se compose de deux pièces distinctes, l'une interne et l'autre externe. La pièce interne et la pièce externe présentent chacune un fond et deux côtés latéraux. La pièce interne est emboîtée dans la pièce externe.

En outre, les pièces interne et externe sont agencées pour que, lors de leur emboîtement l'une sur l'autre, le maillon présente une première portion extrême selon laquelle les côtés latéraux de la pièce interne débordent par rapport aux côtés latéraux de la pièce externe. De même, le maillon présente une seconde portion extrême, opposée à la première portion extrême, selon laquelle les côtés latéraux de la pièce externe débordent par rapport aux côtés latéraux de la pièce interne. Les côtés latéraux débordant sur la première portion extrême sont agencés pour s'engager dans les côtés latéraux débordant sur la seconde portion extrême d'un second maillon adjacent audit maillon. Par ailleurs, les portions extrêmes du maillon, lesquelles sont opposées, sont de forme complémentaire en sorte que l'assemblage avec les maillons adjacents assure à la fois une continuité des pièces internes et une continuité des pièces externes des maillons disposés les uns après les autres et constituant ladite chaîne.

Une telle conception de maillons, constitués d'une pièce interne et d'une pièce externe, présente pour intérêt de faciliter sa fabrication. En outre, l'agencement de la pièce interne et de la pièce externe, permettant de constituer sur le maillon deux portions extrêmes opposées de forme complémentaire, en vue d'assurer une continuité tant des pièces internes que des pièces externes lors de l'assemblage des maillons pour la constitution d'une chaîne, présente pour intérêt de doubler l'épaisseur du maillon et d'assurer une largeur constante entre les côtés latéraux internes de la chaîne entre lesquels se loge une courroie de blocage pour le maintien et le transport des tiges végétales, ce qui garantit un blocage convenable des tiges végétales entre la courroie de blocage et les côtés internes latéraux de la chaîne durant leur transport et surtout durant les opérations de brossage ou autres.

Selon l'invention, la pièce externe et la pièce interne du maillon sont constituées chacune d'un fond plat et de deux branches plates latérales s'étendant verticalement, lesdites pièces présentant la forme d'un U, les fonds plats et les côtés latéraux des deux pièces interne et externe présentant tous la même longueur. Le fond plat de la pièce interne est superposé sur le fond plat de la pièce externe lors de leur emboîtement. En outre, au moins l'une des deux pièces a ses deux branches plates latérales décalées par rapport à son fond. On pourrait en effet prévoir que les deux pièces interne et externe aient leurs branches plates latérales décalées par rapport à leur fond, dans quel cas le décalage des branches latérales de la pièce interne serait opposé au décalage des branches plates latérales de la pièce externe.

De manière préférentielle, le fond et les deux branches plates latérales de la pièce interne correspondent exactement tandis que le fond et les deux branches plates latérales de la pièce externe sont en décalage. On pourrait toutefois prévoir à l'inverse que le fond et les deux branches plates latérales de la pièce externe correspondent exactement tandis que le fond et les deux branches plates latérales de la pièce interne soient en décalage. La pièce dont le fond et les deux branches latérales sont en décalage présente donc deux branches latérales s'étendant longitudinalement par rapport à l'une des extrémités du fond, lesdites branches ne correspondant qu'avec une partie du fond.

Ainsi, la pièce interne est constituée d'un fond plat et de deux branches plates latérales, et présente la forme d'un U, une partie des branches plates latérales constituant les côtés latéraux débordant sur la première portion extrême du maillon. De même, la pièce externe est constituée d'un fond plat et de deux branches plates latérales, présentant la forme d'un U, les branches latérales s'étendant longitudinalement par rapport à l'une des extrémités du fond, lesdites extensions longitudinales des branches latérales constituant les côtés latéraux débordant sur la seconde portion extrême du maillon. Par ailleurs, le fond plat de la pièce externe s'étend longitudinalement par rapport à ses branches latérales, en direction opposée à celle des extensions longitudinales desdites branches, ladite extension longitudinale du fond se situant dans la première portion extrême du maillon.

Selon cette conception, le maillon ne prévoit aucun pliage complémentaire, hormis celui permettant de constituer la forme en « U » sur les deux pièces, afin de réaliser l'emboîtement entre deux maillons attenants. Cette suppression de pliage complémentaire permet de concevoir le maillon par estampage d'une tôle d'acier de fine épaisseur, tout en évitant de fragiliser ladite tôle pilée. Par-ailleurs, l'utilisation de deux pièces pour la constitution du maillon permet de doubler son épaisseur, ce qui augmente sa résistance. En effet, la somme des deux épaisseurs des pièces et les petites dimensions du maillon rendent difficile voire impossible son pliage.

Une telle conception permet également de supprimer toute inclinaison ou conicité sur le maillon. Les maillons sont ainsi ajustés les uns par rapport aux autres lors de leur emboîtement. On évite donc que les tiges végétales ne se coincent dans les maillons de la chaîne transporteuse.

Par ailleurs, la hauteur des côtés latéraux de la pièce interne et la hauteur des côtés latéraux de la pièce externe sont dimensionnées pour que leurs bords supérieurs correspondent.

De même, l'écartement entre les côtés latéraux de la pièce interne est légèrement inférieur à l'écartement entre les côtés latéraux de la pièce externe. Cet écartement est dimensionné pour emboîter précisément la pièce interne dans la pièce externe, et pour engager avec frottement les côtés latéraux débordant sur la première portion extrême du maillon, dans les côtés latéraux débordant sur la seconde portion extrême d'un second maillon adjacent audit maillon.

Cela permet de renforcer la précision d'ajustement, d'une part, entre les deux pièces constituant le maillon selon l'invention, et d'autre part, entre les maillons constituant la chaîne transporteuse.

A ce sujet, l'invention porte également sur une chaîne transporteuse de tiges végétales, notamment les tiges de plante telle que le lin ou le chanvre, la chaîne transporteuse comprenant une courroie et des maillons selon l'invention. Les pièces externes des maillons sont fixées en continu sur la courroie. De même, les pièces internes des maillons sont emboîtées dans et fixées en continu sur les pièces externes. En outre, les côtés latéraux des pièces internes, débordant sur les premières portions extrêmes des maillons, sont engagés dans les côtés latéraux des pièces externes, débordant sur les secondes portions extrêmes des maillons adjacents, de manière à engager les maillons les uns dans les autres et à former une continuité entre les maillons de ladite chaîne tant sur les pièces internes que sur les pièces externes.

Par ailleurs, l'invention concerne également l'ensemble constitué d'une chaîne transporteuse, telle que définie ci-dessus, et d'une courroie de blocage pour la tenue et le transport des tiges végétales, notamment les tiges de plante du type lin ou chanvre.

La description suivante d'un mode préférentiel de conception du maillon et de la chaîne transporteuse, selon l'invention, s'appuie sur des figures, parmi lesquelles :
- la figure 1 représente en perspective un mode préférentiel de conception du maillon selon l'invention, la pièce interne et la pièce externe étant emboîtées l'une dans l'autre ;
- la figure 2 représente en perspective une vue éclatée du maillon selon la figure 1 mettant en évidence la pièce externe et la pièce interne ;
- la figure 3 représente une découpe de plaque pour la réalisation par pliage ou estampage de la pièce externe telle qu'illustrée aux figures 1 et 2 ;
- la figure 4 représente une plaque rectangulaire pour la réalisation par pliage ou estampage de la pièce interne telle qu'illustrée aux figures 1 et 2 ;
- la figure 5 représente partiellement en perspective une chaîne transporteuse équipée de maillons selon la figure 1 ;
- la figure 6 schématise dans un plan de coupe un ensemble constitué d'une chaîne transporteuse et d'une courroie de blocage.

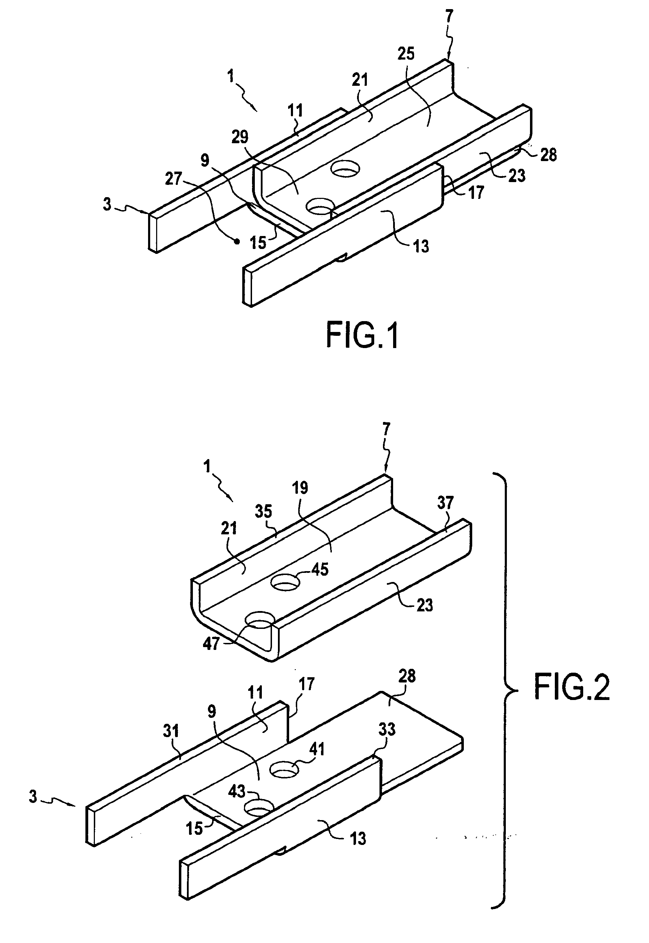

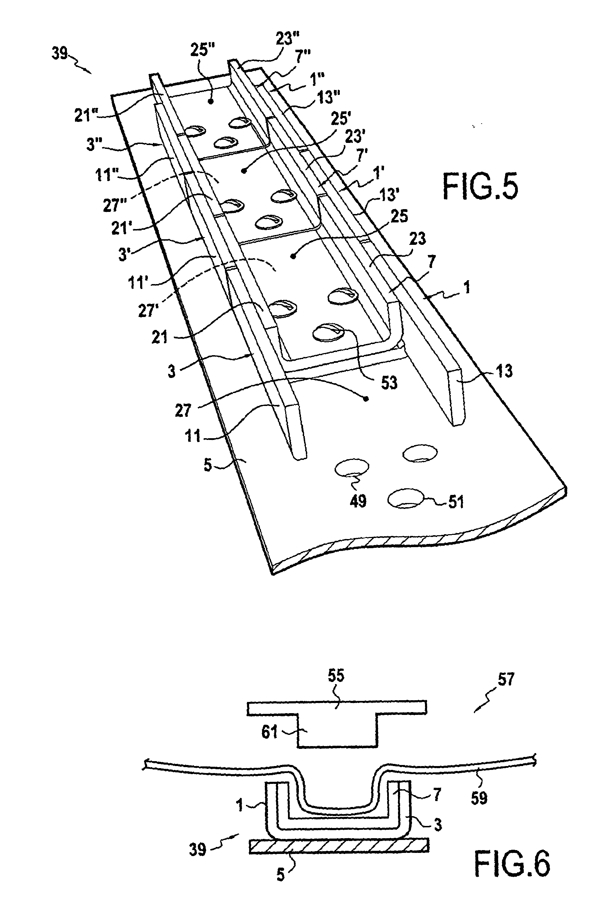

Selon un mode préférentiel de conception, le maillon 1 se compose de deux pièces distinctes l'une de l'autre, tel qu'illustré sur les figures 1 et 2. La première pièce 3 constitue la partie externe du maillon qui est apte à être fixée sur une courroie 5, tel qu'illustré en figure 5. La seconde pièce 7 constitue la partie interne du maillon 1, celle-ci étant apte à être fixée soit simultanément avec la pièce externe et la courroie 5, soit uniquement avec la pièce externe 3 elle-même fixée sur ladite courroie 5.

La pièce interne 7 est agencée pour être emboîtée dans la pièce externe 3, telle qu'illustrée sur la figure 1.

Telle qu'illustrée sur la figure 2, la pièce externe 3 comprend un fond plat 9 et deux branches plates 11, 13 constituant les côtés latéraux de ladite pièce externe 3. La pièce externe 3 présente de préférence, dans une vue en plan, une section en forme de U. Les deux branches plates 11, 13 sont décalées par rapport au fond 9 de la pièce externe 3, les branches correspondant avec uniquement une partie du fond. Ainsi, telles qu'illustrées sur la figure 2, les branches plates latérales 11, 13 s'étendent longitudinalement par rapport à l'une des extrémités 15 du fond 9. Inversement, le fond 9 s'étend longitudinalement en sens inverse des branches 11, 13, vis-à-vis de leur extrémité 17 opposée à ladite extrémité 15 du fond 9. Les deux branches plates 11, 13 sont en outre de longueur identique à celle du fond 9.

Telle qu'illustrée à la figure 2, la pièce interne 7 comprend un fond plat 19 et deux branches plates 21, 23 disposées sur les côtés latéraux. La pièce interne 7 est de préférence constituée d'un profilé en U. Le fond plat 19 et les deux branches plates 21, 23 sont de longueur identique. Les deux branches plates 21, 23 correspondent exactement avec le fond plat 19, c'est-à-dire qu'elles s'étendent verticalement par rapport au fond.

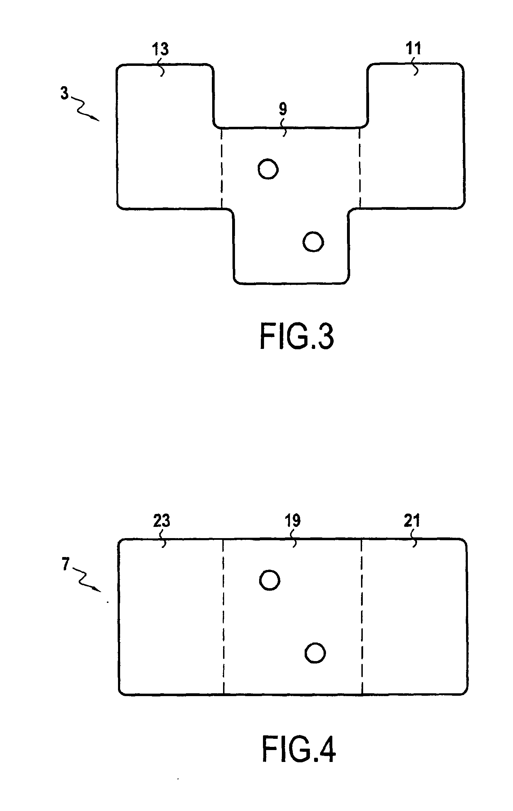

Telle qu'illustrée à la figure 3, la pièce externe 3 est constituée d'une plaque, notamment en acier, de fine épaisseur, présentant une découpe en Y, les deux branches de la forme en Y constituant lors de la réalisation du pliage de la plaque, les deux branches latérales 11, 13, le corps du Y constituant quant à lui le fond 9.

Par ailleurs, telle qu'illustrée à la figure 4, la pièce interne 7 est constituée d'une plaque métallique, notamment de l'acier, de fine épaisseur, comprenant initialement une forme rectangulaire, cette plaque rectangulaire étant agencée pour être pliée suivant deux lignes de manière à constituer le profilé en U constitué du fond 19 et des deux branches latérales 21, 23.

Lorsque les deux pièces 3, 7 sont emboîtées, tel qu'illustré en figure 1, le maillon 1 présente une première portion extrême 25 selon laquelle les branches plates latérales 21, 23 de la pièce interne 7 débordent par rapport aux branches plates latérales 11, 13 de la pièce externe 3. En outre, selon une seconde portion extrême 27, opposée à la première portion extrême 25, les branches latérales 11, 13 de la pièce externe 3 débordent par rapport aux branches latérales 21, 23 de la pièce interne 7.

Ainsi, telles qu'illustrées à la figure 5, les parties de branches 21, 23 de la pièce interne 7 qui débordent et constituent les côtés latéraux de la première portion extrême 25, sont agencées pour s'engager dans les parties de branches latérales 11', 13' de la pièce externe 3' constituant les côtés latéraux de la seconde portion extrême 27' d'un second maillon 1' adjacent au premier maillon 1.

Telle qu'illustrée à la figure 1, la partie 28 du fond 9 qui s'étend longitudinalement en direction opposée aux extensions longitudinales des branches latérales 11, 13, se situe dans la première portion extrême 25 lorsque la pièce interne 7 est emboîtée sur ladite pièce externe 3. Ainsi, lorsque le maillon 1 est engagé dans un maillon 1' adjacent, la partie 28 d'extension longitudinale du fond 9 vient se loger entre les deux extensions longitudinales des branches 11', 13' de la pièce externe 3' du maillon 1' adjacent.

Tel qu'illustré aux figures 1 et 2, le fond plat 19 de la pièce interne 7 est de longueur identique au fond plat 9 de la pièce externe 3. Le fond 19 de la pièce interne se superpose sur le fond 9 de la pièce externe 3 lors de son emboîtement. On peut toutefois envisager que le fond 9 de la pièce externe 3 soit de longueur inférieure à celle du fond 19 de la pièce interne 7.

Lorsque les maillons 1, 1', 1" sont disposés successivement les uns derrière les autres, tels qu'illustrés aux figures 5, les pièces externes 3, 3', 3" sont attenantes les unes aux autres. Les branches latérales 21, 23, 21', 23' des pièces internes 7, 7' sont alors respectivement engagées dans les branches latérales 11', 13', 11", 13" des pièces externes 3', 3". La partie extrême 25 du premier maillon 1 s'engage dans la partie extrême 27' du second maillon 1' et, de même, la partie extrême 25' du second maillon 1' s'engage dans la portion extrême 27" du troisième maillon 1". En outre, les fonds 9 des pièces externes 3, 3', 3" sont disposés les uns à la suite des autres, bord à bord, lorsque les maillons 1, 1', 1" sont engagés et assemblés sur la courroie 5.

De manière préférentielle et non limitative, la hauteur des branches latérales 21, 23 de la pièce interne 7 et la hauteur des branches latérales 11, 13 de la pièce externe 3 sont dimensionnées pour que leurs bords supérieurs 31, 33, 35, 37 correspondent lorsque la pièce interne 7 est emboîtée sur la pièce externe 3, telle qu'illustré sur la figure 1. Ces bords supérieurs 31, 33, 35, 37 sont à une hauteur identique lorsque la pièce interne 7 est emboîtée dans la pièce externe 3. On pourra toutefois dimensionner les pièces 3, 7 pour que les bords supérieurs 35, 37 de la pièce interne 7 dépassent légèrement par rapport aux bords supérieurs 31, 33 de la pièce externe 3 une fois lesdites pièces emboîtées.

Par ailleurs, l'écartement entre les branches 11, 13 de la pièce externe 3 et l'écartement entre les branches 21, 23 de la pièce interne 7 sont dimensionnés pour que lesdites branches soient ajustées au niveau de la portion commune 29 entre la pièce externe 3 et la pièce interne 7 selon laquelle une partie des branches latérales 21, 23 de la pièce interne 7 est emboîtée dans une partie des branches 11, 13 de la pièce externe 3, le fond 19 de la pièce interne reposant sur le fond 9 de la pièce externe 3. De même, cet écartement entre les branches latérales 21, 23 de la pièce interne 7, de dimension légèrement inférieure à l'écartement entre les branches latérales 11, 13 de la pièce externe 3, permet d'engager avec frottement les côtés latéraux de la pièce interne 7, situés dans la portion extrême 25 du maillon 1, à l'intérieur de la seconde portion extrême 27' de la pièce externe 3' du second maillon 1' adjacent au maillon 1.

Telle qu'illustrée sur la figure 5, la chaîne transporteuse 39 est constituée d'une courroie 5 et d'une succession de maillons 1, 1', 1" fixés en continu et en boucle sur la courroie 5. La courroie est de préférence réalisée en caoutchouc et présente une largeur au moins égale à la largeur entre les deux branches 11, 13 de la pièce externe 3 du maillon 1.

Selon un premier mode d'assemblage, les deux pièces 3, 7 du maillon 1 sont fixées sur la courroie 5. Pour cela, telle qu'illustrée sur la figure 2, la pièce externe 3 comprend au moins un orifice 41, et de préférence deux orifices 41, 43 répartis sur le fond plat 9. De même, la pièce interne 7 comprend au moins un orifice 45 et de préférence deux orifices 45, 47 agencés sur le fond plat 19. les orifices 45, 47 sur la pièce interne se superposent avec les orifices 41, 43 de la pièce externe 3 lors de l'emboîtement de ladite pièce interne 7 sur ladite pièce externe 3. Par ailleurs, la courroie 5 comprend également des orifices 49, 51, illustrés en figure 5, agencés pour correspondre avec les orifices 41, 43, 45, 47 des pièces externe 3 et interne 7 lors de l'assemblage des maillons 1 sur la courroie 5. Cet assemblage est de préférence réalisé au moyen de rivets 53.

On peut également envisager, selon une variante de conception, que la pièce externe 3 soit fixée sur la courroie 5 notamment au moyen de rivets 53, tels que décrits ci-dessus, les orifices sur le fond 9 étant toutefois agencés pour que, lors de la mise en place des rivets, lesdits rivets ne dépassent pas de la surface plane du fond 9, celle-ci recevant le fond 19 de la pièce interne 7, la pièce externe 3 comprenant en outre des trous taraudés distincts des orifices de fixation prévus pour la fixation par rivet, ces trous taraudés étant agencés pour correspondre avec des trous de passage agencés sur le fond 19 de la pièce interne 7, lesdits trous de passage étant aptes à permettre l'insertion de vis pour son assemblage sur les trous taraudés. Ainsi, l'assemblage de la pièce interne 7 sur la pièce externe 3 est réalisé au moyen d'un vissage, ledit vissage présentant pour avantage de permettre le remplacement de la seconde pièce lors d'une usure prononcée de celle-ci, ladite usure étant notamment due au contact des tiges de lin.

Telle qu'illustrée à la figure 6, la chaîne transporteuse 39 est agencée pour coopérer avec une courroie de blocage 55, l'ensemble 57 ainsi constitué étant mis en oeuvre sur des machines pour maintenir et transporter les tiges de plantes 59. Pour cela, la courroie de blocage 55 est agencée pour se loger dans la pièce interne 7 des maillons 1. Lorsque la courroie de blocage 55 est encastrée dans le maillon 1, la tige végétale 59 est positionnée entre la courroie de blocage 55 et la pièce interne 7 du maillon, la tige 59 étant alors bloquée entre lesdits éléments. De manière préférentielle; la courroie de blocage 55 présente une section soit de forme rectangulaire soit de forme en T. La largeur de la section rectangulaire ou la largeur de la patte 61 du T est légèrement inférieure à la largeur définie entre les deux branches 21, 23 de la pièce interne 7, notamment lorsque la courroie de blocage 55 est réalisée dans un matériau dont la dureté empêche la déformation de la patte 61 pour son insertion entre les deux branches 21, 23. Toutefois, lorsque cette pièce de blocage est facilement déformable, on pourra prévoir une largeur de la patte 61 du T identique, voire légèrement supérieure, à la largeur entre les deux pattes 21, 23 de la pièce interne 7.

## Revendications

1. Maillon (1) de chaîne pour la tenue et le transport de tiges végétales sur des machines industrielles, ledit maillon (1) étant apte à être fixé sur une courroie (5) et à coopérer avec des maillons adjacents (1', 1") pour former une chaîne continue (39), **caractérisé en ce qu'**il se compose d'une pièce externe (3) et d'une pièce interne (7), présentant chacune un fond (9, 10) et deux côtés latéraux (11, 13 ; 21, 23), la pièce interne (7) étant emboîtée dans la pièce externe (3), lesdites pièces (3,7) étant agencées pour que, lors de leur emboîtement, le maillon (1) présente une première portion extrême (25) selon laquelle les côtés latéraux (21, 23) de la pièce interne (7) débordent par rapport aux côtés latéraux (11, 13) de la pièce externe (3), et une seconde portion extrême (27), opposée à la première (25), selon laquelle les côtés latéraux (11, 13) de la pièce externe (3) débordent par rapport aux côtés latéraux (21, 23) de la pièce interne (7), lesdites portions extrêmes (25) et (27) étant complémentaires en sorte que l'assemblage avec les maillons adjacents (1', 1") assure une continuité des pièces internes (7, 7', 7") et une continuité des pièces externes (3, 3', 3")

2. Maillon (1) selon la revendication 1, **caractérisé en ce que** la pièce externe (3) et la pièce interne (7) présentent chacune un fond plat (9, 19) et deux branches plates latérales (11, 13, 21, 23) formant un U, les fonds plats (9, 19) et les branches plates latérales (11, 13, 21, 23) étant tous de longueurs identiques, les fonds (9, 19) étant superposés lors de l'emboîtement de la pièce interne (7) dans la pièce externe (3), et **en ce qu'**au moins l'une des deux pièces (3, 7) a ses deux branches plates latérales (11, 13, 21, 23) décalées par rapport à son fond (9, 19).

3. Maillon (1) selon la revendication 2, **caractérisé en ce que** le fond (19) et les deux branches plates latérales (21, 23) de la pièce interne (7) correspondent, tandis que le fond (9) et les deux branches plates latérales (11, 13) de la pièce externe (3) sont en décalage.

4. Maillon (1) selon l'une des revendications 1 à 3, **caractérisé en ce que** le fond plat (19) de la pièce interne (7) comprend au moins un orifice (45, 47) et le fond plat (9) de la pièce externe (3) comprend au moins un orifice (41, 43), lesdits orifices (41, 43, 45, 47) se superposant lors de l'emboîtement des deux pièces (3, 7) et étant agencés pour permettre la fixation entre lesdites pièces (3,7) du maillon (1).

5. Maillon (1) selon l'une des revendications 1 à 4, **caractérisé en ce que** la hauteur des côtés latéraux (21, 23) de la pièce interne (7) et la hauteur des côtés latéraux (11, 13) de la pièce externe (3) sont dimensionnées pour que leurs bords supérieurs (31 , 33, 35, 37) correspondent.

6. Maillon (1) selon l'une des revendications 1 à 5, **caractérisé en ce que** l'écartement entre les côtés latéraux (21, 23) de la pièce interne (7) est inférieur à l'écartement entre les côtés latéraux (11, 13) de la pièce externe (3), lesdits écartement étant dimensionnés pour emboîter précisément la pièce interne (7) dans la pièce externe (3) et pour engager avec frottement les côtés latéraux débordant sur la première portion extrême (25) du maillon (1), dans les côtés latéraux débordant sur la seconde portion extrême (27') d'un second maillon (1') adjacent audit maillon (1).

7. Chaîne transporteuse (39) de tiges végétales (59), notamment les tiges de plante telle que le lin ou le chanvre, comprenant une courroie (5) et des maillons (1, 1', 1") selon l'une des revendications 1 à 6, les pièces externes (3, 3', 3") des maillons (1, 1', 1") étant fixées en continu sur la courroie (5), les pièces internes (7, 7', 7") des maillons étant emboîtés dans et fixées en continu sur les pièces externes (3, 3', 3"), et les côtés latéraux (21, 23, 21', 23') des pièces internes (7, 7'), débordant sur les premières portions extrêmes (25, 25") des maillons (1, 1'), étant engagés dans les côtés latéraux (11', 13', 11", 13") des pièces externes (3', 3"), débordant sur les secondes portions extrêmes (27', 27") des maillons adjacent (1', 1").

8. Chaîne (39) selon la revendication 7 rattachée à la revendication 4, **caractérisée en ce que** la courroie (5) comprend des orifices (49, 51) agencés pour correspondre avec au moins les orifices (41, 43) agencés sur les pièces externes (3, 3', 3").

9. Chaîne (39) selon la revendication 8, **caractérisé en ce que** les orifices (49, 51) de la courroie correspondent avec les orifices (45, 41) agencés sur les pièces internes (7).

10. Ensemble (57) constitué d'une chaîne transporteuse (39) selon l'une des revendications 7 à 9 et d'une courroie de blocage (55), ladite courroie de blocage (55) étant agencée pour se loger dans les pièces internes (7) des maillons (1) disposées en continu et pour maintenir les tiges végétales (59), notamment des tiges de plante telle que le lin ou le chanvre, bloquées entre ladite courroie (55) et les pièces internes (7) des maillons (1).

11. Ensemble (57) selon la revendication 10, **caractérisé en ce que** la courroie de blocage (55) présente une section rectangulaire ou en forme de T apte à être introduite entre les côtés latéraux (21, 23) de la pièce interne (7) du maillon (1).

## Claims

1. A chain link (1) for holding and transporting plant stems on industrial machines, said link (1) being suitable to be fixed on a belt (5) and cooperate with adjacent links (1', 1") to form a continuous chain (39), **characterised in that** it comprises an external piece (3) and an internal piece (7), each having a base (9, 10) and two lateral sides (11, 13; 21, 23), the internal piece (7) being fitted in the external piece (3), said pieces (3,7) being arranged so that during fitting, the link (1) has a first end portion (25) according to which the lateral sides (21, 23) of the internal piece (7) overlap relative to the lateral sides (11, 13) of the external piece (3), and a second end portion (27), opposite to the first (25), according to which the lateral sides (11, 13) of the external piece (3) overlap relative to the lateral sides (21, 23) of the internal piece (7), said end portions (25) and (27) being complementary such that assembly with adjacent links (1', 1 ") ensures continuity of the internal pieces (7, 7', 7") and continuity of the external pieces (3, 3', 3").

2. The chain link (1) as claimed in Claim 1, **characterised in that** the external piece (3) and the internal piece (7) each have a flat base (9, 19) and two flat lateral branches (11, 13, 21, 23) forming a U, the flat bases (9, 19) and the flat lateral branches (11, 13, 21, 23) all being of identical lengths, the bases (9, 19) being superposed during fitting of the internal piece (7) into the external piece (3), and **in that** at least one of the two pieces (3, 7) has its two flat lateral branches (11, 13, 21, 23) offset relative to its base (9, 19).

3. The chain link (1) as claimed in Claim 2, **characterised in that** the base (19) and the two flat lateral branches (21, 23) of the internal piece (7) correspond, whereas the base (9) and the two flat lateral branches (11, 13) of the external piece (3) are offset.

4. The chain link (1) as claimed in any one of Claims 1 to 3, **characterised in that** the flat base (19) of the internal piece (7) comprises at least one orifice (45, 47) and the flat base (9) of the external piece (3) comprises at least one orifice (41, 43), said orifices (41, 43, 45, 47) superposing during the fitting of the two pieces (3, 7) and being arranged to join together said pieces (3,7) of the link (1).

5. The chain link (1) as claimed in any one of Claims 1 to 4, **characterised in that** the height of the lateral sides (21, 23) of the internal piece (7) and the height of the lateral sides (11, 13) of the external piece (3) are dimensioned so that their upper edges (31, 33, 35, 37) correspond.

6. The chain link (1) as claimed in any one of Claims 1 to 5, **characterised in that** the clearance between the lateral sides (21, 23) of the internal piece (7) is less than the clearance between the lateral sides (11, 13) of the external piece (3), said clearance being dimensioned to precisely fit the internal piece (7) into the external piece (3) and to frictionally engage the lateral sides overlapping on the first end portion (25) of the link (1), in the lateral sides overlapping on the second end portion (27') of a second link (1') adjacent to said link (1).

7. A transport chain (39) of plant stems (59), especially plant stems such as flax or hemp, comprising a belt (5) and links (1, 1', 1") as claimed in any one of Claims 1 to 6, the external pieces (3, 3', 3") of the links (1, 1', 1") being fixed continuously on the belt (5), the internal pieces (7, 7', 7") of the links being fitted in and fixed continuously on the external pieces (3, 3', 3"), and the lateral sides (21, 23, 21', 23') of the internal pieces (7, 7'), overlapping on the first end portions (25, 25') of the links (1, 1'), being engaged in the lateral sides (11', 13', 11", 13") of the external pieces (3', 3"), overlapping on the second end portions (27', 27") of the adjacent links (1', 1").

8. The chain (39) as claimed in Claim 7 associated with Claim 4, **characterised in that** the belt (5) comprises orifices (49, 51) arranged to correspond with at least the orifices (41, 43) arranged on the external pieces (3, 3', 3").

9. The chain (39) as claimed in Claim 8, **characterised in that** the orifices (49, 51) of the belt correspond with the orifices (45, 41) arranged on the internal pieces (7).

10. An assembly (57) comprising a transport chain (39) as claimed in any one of Claims 7 to 9 and a blocking belt (55), said blocking belt (55) being arranged to lodge in the internal pieces (7) of the links (1) placed continuously and to retain the plant stems (59), especially plant stems such as flax or hemp, blocked between said belt (55) and the internal pieces (7) of the links (1).

11. The assembly (57) as claimed in Claim 10, **characterised in that** the blocking belt (55) has a rectangular or T-shaped cross-section suitable to be introduced between the lateral sides (21, 23) of the internal piece (7) of the link (1).

## Patentansprüche

1. Kettenglied (1) einer Kette zum Halten und Befördern von PflanzenstengeIn an industriellen Maschinen, wobei das Kettenglied (1) geeignet ist, an einem Riemen (5) befestigt zu werden und mit benachbarten Kettengliedern (1', 1") zusammenzuwirken, um eine durchgehende Kette (39) zu bilden, **dadurch gekennzeichnet, daß** es aus einem Außenteil (3) und einem Innenteil (7) besteht, die jeweils einen Boden (9, 10) sowie zwei Längsseiten (11, 13; 21, 23) aufweisen, wobei das Innenteil (7) in das Außenteil (3) eingefügt ist, wobei die Teile (3, 7) ausgelegt sind, damit bei ihrem Ineinanderfügen das Kettenglied (1) einen ersten Endabschnitt (25), entlang dessen die Längsseiten (21, 23) des Innenteils (7) gegenüber den Längsseiten (11, 13) des Außenteils (3) vorragen, sowie einen dem ersten (25) gegenüberliegenden zweiten Endabschnitt (27), entlang dessen die Längsseiten (11, 13) des Außenteils (3) gegenüber den Längsseiten (21, 23) des Innenteils (7) vorragen, aufweist, wobei die Endabschnitte (25) und (27) derart ergänzend sind, daß das Verbinden mit den benachbarten Kettengliedern (1', 1") einen stetigen Verlauf der Innenteile (7, 7', 7") sowie einen stetigen Verlauf der Außenteile (3, 3', 3") sicherstellt.

2. Kettenglied (1) nach Anspruch 1, **dadurch gekennzeichnet, daß** das Außenteil (3) und das Innenteil (7) jeweils einen flachen Boden (9, 19) sowie zwei flache, ein U bildende Seitenschenkel (11, 13, 21, 23) aufweisen, wobei die flachen Böden (9, 19) und die flachen Seitenschenkel (11, 13, 21, 23) alle gleiche Längen aufweisen, wobei die Böden (9, 19) bei Einfügen des Innenteils (7) in das Außenteil (3) übereinander liegen, und daß die beiden flachen Seitenschenkel (11, 13, 21, 23) von wenigstens einem der beiden Teile (3, 7) gegenüber seinem Boden (9, 19) versetzt sind.

3. Kettenglied (1) nach Anspruch 2, **dadurch gekennzeichnet, daß** der Boden (19) und die beiden flachen Seitenschenkel (21, 23) des Innenteils (7) übereinstimmen, während der Boden (9) und die beiden flachen Seitenschenkel (11, 13) des Außenteils (3) zueinander versetzt sind.

4. Kettenglied (1) nach einem der Ansprüche 1 bis 3, **dadurch gekennzeichnet, daß** der flache Boden (19) des Innenteils (7) wenigstens eine Öffnung (45, 47) umfaßt und der flache Boden (9) des Außenteils (3) wenigstens eine Öffnung (41, 43) aufweist, wobei die Öffnungen (41, 43, 45, 47) bei Ineinanderfügen der beiden Teile (3, 7) übereinander zu liegen kommen und angeordnet sind, um die Befestigung zwischen den Teilen (3, 7) des Kettenglieds (1) zu ermöglichen.

5. Kettenglied (1) nach einem der Ansprüche 1 bis 4, **dadurch gekennzeichnet, daß** die Höhe der Längsseiten (21, 23) des Innenteils (7) und die Höhe der Längsseiten (11, 13) des Außenteils (3) bemessen sind, damit ihre oberen Kanten (31, 33, 35, 37) übereinstimmen.

6. Kettenglied (1) nach einem der Ansprüche 1 bis 5, **dadurch gekennzeichnet, daß** der Abstand zwischen den Längsseiten (21, 23) des Innenteils (7) kleiner als der Abstand zwischen den Längsseiten (11, 13) des Außenteils (3) ist, wobei die Abstände bemessen sind, um das Innenteil (7) präzise in das Außenteil (3) einzufügen und um die an dem ersten Endabschnitt (25) des Kettenglieds (1) überstehenden Längsseiten in die an dem zweiten Endabschnitt (27') eines dem Kettenglied (1) benachbarten zweiten Kettenglieds (1') überstehenden Längsseiten reibschlüssig einzustecken.

7. Förderkette (39) für Pflanzenstengel (59), insbesondere die Stengel einer Pflanze wie Leinen oder Hanf, umfassend einen Riemen (5) und Kettenglieder (1, 1', 1") nach einem der Ansprüche 1 bis 6, wobei die Außenteile (3, 3', 3") der Kettenglieder (1, 1', 1") an dem Riemen (5) durchgehend befestigt sind, wobei die Innenteile (7, 7',7") der Kettenglieder in die Außenteile (3, 3', 3") eingefügt und an diesen durchgehend befestigt sind, und wobei die Längsseiten (21, 23, 21', 23') der Innenteile (7, 7'), die an den ersten Endabschnitten (25, 25') der Kettenglieder (1, 1') überstehen, in die an den zweiten Endabschnitten (27', 27") der benachbarten Kettenglieder (1', 1") überstehenden Längsseiten (11', 13', 11", 13") der Außenteile (3, 3") eingesteckt sind.

8. Kette (39) nach Anspruch 7 in Verbindung mit Anspruch 4, **dadurch gekennzeichnet, daß** der Riemen (5) Öffnungen (49, 51) aufweist, die angeordnet sind, um mit wenigstens den an den Außenteilen (3, 3', 3") angeordneten Öffnungen (41, 43) übereinzustimmen.

9. Kette (39) nach Anspruch 8, **dadurch gekennzeichnet, daß** die Öffnungen (49, 51) des Riemens mit den an den Innenteilen (7) angeordneten Öffnungen (45, 47) übereinstimmen.

10. Anordnung (57) bestehend aus einer Förderkette (39) nach einem der Ansprüche 7 bis 9 und aus einem Blockierriemen (55), wobei der Blockierriemen (55) angeordnet ist, um in den durchgehend angeordneten Innenteilen (7) der Kettenglieder (1) zu liegen zu kommen und um die Pflanzenstengel (59), insbesondere Stengel einer Pflanze wie Leinen oder Hanf, zwischen dem Riemen (55) und den Innenteilen (7) der Kettenglieder (1) blockiert zu halten.

11. Anordnung (57) nach Anspruch 10, **dadurch gekennzeichnet, daß** der Blockierriemen (55) einen rechteckigen oder T-förmigen Querschnitt aufweist, der geeignet ist, zwischen den Längsseiten (21, 23) des Innenteils (7) des Kettenglieds (1) eingeführt zu werden.
